Europäisches Patentamt

European Patent Office

Office européen des brevets

(19)

(11) EP 1 008 983 B1

(12) EUROPEAN PATENT SPECIFICATION

(45) Date of publication and mention
of the grant of the patent:
15.09.2004 Bulletin 2004/38

(51) Int Cl.⁷: **G10L 15/06**

(21) Application number: 98122791.1

(22) Date of filing: 01.12.1998

(54) **Maximum likelihood linear regression (MLLR) speaker adaptation using dynamic weighting**

Sprecheradaptation nach dem linear-regressiven Maximum-Likelihood Vefahren

Adaptation au locuteur par regression linéaire à maximum de vraissemblance utilisant une pondération dynamique

(84) Designated Contracting States:
DE FR GB

(43) Date of publication of application:
14.06.2000 Bulletin 2000/24

(73) Proprietor: **Sony International (Europe) GmbH**
**10785 Berlin (DE)**

(72) Inventors:
• **Goronzy, Silke, Sony Inter. (Europe) GmbH**
**70736 Fellbach (DE)**
• **Kompe, Ralf, Sony Inter. (Europe) GmbH**
**70736 Fellbach (DE)**
• **Buchner, Peter, Sony Inter. (Europe) GmbH**
**70736 Fellbach (DE)**

(74) Representative: **Müller - Hoffmann & Partner**
**Patentanwälte,**
**Innere Wiener Strasse 17**
**81667 München (DE)**

(56) References cited:
• **GALES M J F ET AL: "MEAN AND VARIANCE ADAPTATION WITHIN THE MLLR FRAMEWORK" COMPUTER SPEECH AND LANGUAGE, vol. 10, no. 4, October 1996, pages 249-264, XP000766372**
• **PAUL D B: "NEW DEVELOPMENTS IN THE LINCOLN STACK-DECODER BASED LARGE-VOCABULARY CSR SYSTEM" PROCEEDINGS OF THE INTERNATIONAL CONFERENCE ON ACOUSTICS, SPEECH, AND SIGNAL PROCESSING (ICASSP), DETROIT, MAY 9 - 12, 1995 SPEECH, vol. 1, 9 May 1995, pages 45-48, XP000657926 INSTITUTE OF ELECTRICAL AND ELECTRONICS ENGINEERS**
• **YUNXIN ZHAO: "A NEW SPEAKER ADAPTATION TECHNIQUE USING VERY SHORT CALIBRATION SPEECH" SPEECH PROCESSING, MINNEAPOLIS, APR. 27 - 30, 1993, vol. 2, 27 April 1993, pages II-562-565, XP000427851 INSTITUTE OF ELECTRICAL AND ELECTRONICS ENGINEERS**
• **JARRE A ET AL: "Some experiments on HMM speaker adaptation" PROCEEDINGS: ICASSP 87. 1987 INTERNATIONAL CONFERENCE ON ACOUSTICS, SPEECH, AND SIGNAL PROCESSING (CAT. NO.87CH2396-0), DALLAS, TX, USA, 6-9 APRIL 1987, pages 1273-1276 vol.3, XP002099873 1987, New York, NY, USA, IEEE, USA**

## Description

The present invention concerns a method to perform an unsupervised speaker adaptation for speech recognition systems that are using continous density Hidden Markov Models (HMMs) with the Maximum Likelihood Linear Regression (MLLR) adaptation.

State-of-the-art speech recognizers consist of a set of statistical distributions modeling the acoustic properties (encoded in feature vectors) of certain speech segments. As a simple example, one Gaussian distribution is taken for each phoneme. These distributions are attached to states. A stochastic model, usually continous density Hidden Markov Models, defines the propabilities for sequences of states and for acoustic properties given a state. Passing a state consumes one acoustic feature vector covering a frame of e. g. 10 ms of the speech signal. The stochastic parameters of such a recognizer are trained using a large amount of speech data either from a single speaker yielding a speaker dependent (SD) system or from many speakers yielding a speaker independent (SI) system.

Nowadays most of the speech recognition systems using Hidden Markov Models to represent the different phonemes of a language are speaker independent. However, normally state-of-the-art speaker dependent systems yield much higher recognition rates than speaker independent systems. Therefore, speaker adaptation is a widely used method to increase the recognition rates of speaker independent systems. However, for many applications it is not feasible to gather enough data from a speaker to train the system. In case of a consumer device this might even not be wanted, since the device has to serve different users. To overcome this mismatch in recognition rates, speaker adaptation algorithms are widely used in order to achieve recognition rates that come close to speaker dependent systems, but only use a fraction of speaker dependent data compared to speaker dependent systems. These systems initially take speaker independent models and adapt them so that they better match to the new speakers acoustics by the use of the speech received from said speaker (adaptation data).

The basic principle of many speaker adaptation techniques is to modify the parameters of the Hidden Markov Models, e. g. those of the Gaussian densities modeling the acoustic features. In Maximum Likelihood Linear Regression adaptation a transformation matrix is calculated from the adaptation data and groups of model parameters, e. g. the mean vectors or the variance vectors etc., are multiplied with this transformation matrix (or n transformation matrices) to maximize the likelihood of the adaptation data.

Usually only the parameters of those Gaussian densities can be updated which corresponding phonemes have been observed in the adaptation data. In MLLR adaptation all Gaussian densities are clustered to build so-called regression classes. For each regression class a separate transformation matrix is calculated. Each time one or several phonemes from a specific regression class is/ are observed in the adaptation data, a transformation matrix is calculated for this class and all Gaussian densities belonging to it are adapted. Thus, even those Gaussian densities for which the phonemes have not been observed in the adaptation data can be updated, what makes this approach faster than comparable ones, whereafter the next spoken utterance is analyzed with the updated model parameters and the adaptation can be performed in a next adaptation step.

As stated above, MLLR estimates linear transformations for groups of model parameters to maximize the likelihood of the adaptation data. Up to now, MLLR has been applied to the mean parameters and the Gaussian variances in mixture-Gaussian HMM-systems. An example of MLLR adaptation is disclosed in M.J.F. Gales et al . "Mean and variance adaptation within the MLLR framework" Computer Speech and Language vol. 10, 1996, pp.249-264. The above-described method according to the state of the art obtains good results with rather big amounts of adaptation data. If only very small amounts of adaptation data are available for each adaptation step, i. e. often only one utterance, which might e. g. be a single word, the calculation of the transformation matrices may partly be erroneous, because the adaptation statistics are estimated on non-representative data D.B Paul "New developments in the Lincoln Stack-Decoder based large vocabulary CSR System" Proceedings of ICASSP 1995 discusses the problem of insufficient training data and parameter smoothing but not in the context of MLLR adaptation. Therefore, it is the object underlying the present invention to offer an improved method to perform an unsupervised speaker adaptation for continous density Hidden Markov Models using the Maximum Likelihood Linear Regression adaptation.

This object is solved according to independent claim 1, preferred embodiments are defined in dependent subclaims 2 to 9.

According to the inventive method a very fast adaptation can be achieved, since it is allowed to calculate the transformation matrix for each regression class reliable after a single (or a few) utterance(s), which correspond to only a few seconds of speech. Therewith, also an on-line adaptation is possible. After the calculation of the respective transformation matrix the group of parameters belonging to that regression class are updated and the next few seconds are then recognized using the HMMs that were modified in the previous step and so on. Therewith, a very fast adaptation to a new speaker can be performed.

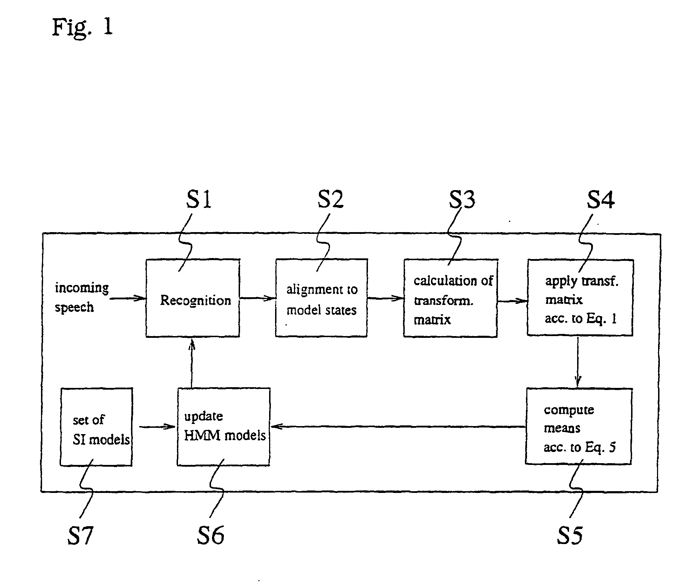

The present invention will be better understood with the following detailed description of an exemplatory embodiment thereof taken in conjunction with Fig. 1 that shows a recognition and adaptation procedure including the dynamic weighting scheme and formulas (1) to (5).

The exemplatory embodiment of the present invention uses the mean parameters in mixture-Gaussian HMM-systems as group of model parameters that maximize the likelihood of the adaptation data. As mentioned above, the present invention is not limited thereto, but also the Gaussian variances or another group of model parameters can be used.

Fig. 1 shows the recognition and adaptation procedure including the dynamic weighting scheme according to the present invention.

In an initialization step all the mean vectors $\mu_i$ of the Gaussian densities are assigned to one of the regression classes r so that the means $\mu_{ir}$ are available as group of model parameters to maximize the likelihood of the adaptation data. The regression classes could be designed using a standard Vector Quantization algorithm, i. e. clustering feature vectors according to any numerical distance measure, but also the use of regression class trees or any other method is possible. The design and assignment of the regression classes r prior to recognition can also be performed dynamically depending on the amount of available adaptation data during the recognition process.

After the incoming speech has been recognized in a step S1, it is aligned to the model states in a step S2. Thereafter, the relevant statistics are extracted and used to calculate one transformation matrix W for each of the involved regression classes in step S3. New mean vectors $\hat{\mu}_{ir}$ are computed using a corresponding transformation matrix $W_r$ by applying the following equation (1):

$$\hat{\mu}_{ir}^k = W_r {}^* \mu_{ir}^{k-1} \qquad (1)$$

in a step S4 to calculate the estimated means $\hat{u}_{ir}^k$, where k is the current adaptation step and (k-1) the previous one, respectively. This updating operation of the means $\mu_{ir}^k$ in particular the computation of $W_r$ is done according to known approaches of the prior art.

According to the prior art, these estimated means $\hat{\mu}_{ir}^k$ equal to the updated means $\mu_{ir}^k$ that are used in the modified HMM-models, as it is shown in equation (1a). $W_r$ and thereby all $\hat{\mu}_{ir}^k$ from this regression class are estimated from the adaptation data observed for this regression class steps S6 and S7 are in the current adaptation step k. Thereafter, according to the prior art, steps S6 and S7 are directly performed wherein the HMM-models that are used without adaptation in a first adaptation step are adapted according to the following equation (1a)

$$\mu_{ir}^k = \hat{\mu}_{ir}^k \qquad (1a)$$

As mentioned before, the procedure described so far works according to the procedure already known from the prior art. However, as also mentioned above, this method works only reliable with a rather big amount of adaptation data.

According to the present invention, on the other hand, the adapted mean according to equation (1) as it is calculated in step S4 is not directly used to modify the HMMs, but the adapted mean parameters are modified in a step S5. Therefore, a weighted sum of the "old" and "new" mean is used to modify the HMM-models.

In step S5, therefore, the updated mean $\mu_{ir}^k$ is not only calculated as in equation (1a) above, where it directly corresponds to $\hat{\mu}_{ir}^k$ but is basically calculated as follows in equation (2):

$$\mu_{ir}^k = \alpha_r \hat{\mu}_{ir}^k + (1-\alpha_r)\mu_{ir}^{k-1} \qquad (2)$$

where $\alpha_r$ is a first weighting factor for a respective regression class r. The index k starts with 1. $\mu_{ir}^0$ are the mean vectors of the speaker-independent system.

With a first fixed weighting factor $\alpha_r \sim 0,001 \ldots 0,9$ the new utterances represented by $\hat{\mu}_{ir}^k$ are weighted so that the data is adapted using a short term history having a $\alpha$-dependent length. Therefore, the transformation matrices obtained on basis of small amounts of adaptation data that may be partly erroneous have a lower influence on the means used to modify the HMMs, but a fast adaptation is secured. Using this weighted sum allows a fast adaptation with only small amounts of adaptation data (e. g., 1 utterance) so that an on-line adaptation is possible.

In a preferred embodiment, the first weighting factor $\alpha_r$ is changed dynamically while the new speaker is using the system. A better performance can be gained when major changes to the HMMs are made when a new speaker starts using the system so that the HMMs better match his acoustics to have very quickly a low failure rate. Later, the changes should become smaller and smaller so that new utterances of a speaker are less weighted than all previous utterances of this specific speaker so that the sum of older utterances from this specific speaker have much more influence than the newly spoken ones. Therefore, the number of frames that have been observed so far are taken into account to dynamically change the first weighting factor $\alpha_r$ as follows in equation (3):

$$\alpha_r^k = \frac{n_r^k}{\tau_r^{k-1} + n_r^k} . \qquad (3)$$

Therefore, $(1-\alpha_r^k)$ of equation (2) above is defined as follows in equation (4).

$$(1-\alpha_r^k) = \frac{\tau_r^{k-1}}{\tau_r^{k-1} + n_r^k} , \qquad (4)$$

where $n_r^k$ is the number of frames that were observed so far during adaptation step k, $0 < k \leq \infty$, in regression class r and $\tau_r^k$ is a second weighting factor determining the initial influence of the speaker independent models, which is determined heuristically. $\tau_r^k$ can also be a constant.

According to a further preferred embodiment it is possible to allow any additional utterances after a first adaptation procedure to do only a fine adaptation. Therefore, the adaptation according to equations (3) and (4) will be weighted with the number of speech frames that have already been observed from a specific speaker so that the adaptation that was already done in the past is used with a bigger weight than the new utterances. To perform this, $\tau_r^k$ increases by $n_r^k$ after each adaptation step so that $\tau_r^k = \tau_r^{k-1} + n_r^k$. $\tau_r^0$ is an initial value determined heuristically and may vary between several hundreds and several thousands (e. g. 100 - 10.000).

Therewith, taking all preferred embodiments into account, equation 2 above can be re-written as:

$$\mu_{ir}^k = \frac{\tau_r^{k-1} \, \mu_{ir}^{k-1} + n_r^k \, \hat{\mu}_{ir}^k}{\tau_r^{k-1} + n_r^k} \qquad (5)$$

Using this weighting scheme, $\alpha_r^k$ and thus the influence of the most recent observed means decreases over time and the parameters will move towards the optimum for that speaker after major changes to the HMM-models have been made when a new speaker starts using the system.

## Claims

1. Method to perform an unsupervised speaker adaptation for Continuous Density Hidden Markov Models using the Maximum Likelihood Linear Regression adaptation, **characterized in that**
   for an online-adaptation an adapted group of parameters ($a^k$) to maximize the likelihood of the adaptation data is a weighted sum of the previously adapted group of parameters ($a^{k-1}$) and the estimated group of parameters ($\hat{a}^k$) according to the Maximum Likelihood Linear Regression.

2. Method according to claim 1, **characterized in that** the weighted sum is calculated as follows:

   $$a^k = (\alpha \cdot \hat{a}^k + (1-\alpha) \cdot a^{k-1},$$

   wherein k is the actual adaptation step, $a^k$ is the adapted group of parameters that maximizes the likelihood of the adaptation data, $a^{k-1}$ is the adapted group of parameters that previously maximized the likelihood of the adaptation data, $\hat{a}^k$ is the estimated group of parameters that is calculated with the Maximum Likelihood Linear regression and $\alpha$ is a first weighting factor.

3. Method according to claim 2, **characterized in that** said first weighting factor ($\alpha$) changes dynamically depending on the time a new specific speaker is using the system.

4. Method according to claim 3, **characterized in that** said first weighting factor ($\alpha$) decreases with the time said specific speaker uses the system.

5. Method according to claim 4. **characterized in that** the first weighting factor ($\alpha$) is calculated as follows:

   $$\alpha^k = \frac{n^k}{\tau^{k-1} + n^k},$$

   wherein $n^k$ is the number of frames that were observed so far during adaptation step k and $\tau^{k-1}$ is a second weighting factor ($\tau$) that is determined heuristically.

6. Method according to claim 5, **characterized in that** said second weighting factor ($\tau$) is dependent on the number of speech frames that have already been observed from said specific speaker so that the adaptation already done has a bigger weight than newly spoken utterances.

7. Method according to claim 5 or 6, **characterized in that** said second weighting factor ($\tau$) increases by $n^k$ after each adaptation step.

8. Method according to any one of the preceding claims, **characterized in that** said group of parameters ($a^k$) to maximize the likelihood of the adaptation data are the mean parameters ($\mu_{ir}^k$, i: number of the respective Gaussian class, r: number of the respective regression class within the respective Gaussian class) in mixture-Gaussian HMM systems.

9. Method according to any one of the preceding claims, **charscterized in that** said group of parameters ($a^k$) to maximize the likelihood of the adaptation data are the Gaussian variance parameters ($\sum$) in mixture-Gaussian HMM systems.

## Patentansprüche

1. Verfahren zur Durchführung einer nicht-überwachten Sprecheranpassung für Hidden-Markov-Modelle mit kontinuierlicher Dichte, wobei die Maximum Likelihood-Linear-Regressionsadaption verwendet wird, **dadurch gekennzeichnet, dass** für eine Online-Anpassung eine angepasste Gruppe von Parametern ($a^k$) zur Maximierung der Likelihood der Anpassungsdaten eine gewichtete Summe der vorhergehend angepassten Gruppe von Parametern ($a^{k-1}$) und der geschätzten Gruppe von Parametern ($â^k$) gemäß der Maximum-Likelihood-Regression ist.

**2.** Verfahren gemäß Anspruch 1, **dadurch gekennzeichnet, dass** die gewichtete Summe wie folgt berechnet wird:

$$a^k = \alpha \cdot â^k + (1-\alpha) \cdot a^{k-1},$$

wobei k der momentane Anpassungsschritt. $a^k$ die angepasste Gruppe von Parametern, die die Likelihood der Anpassungsdaten maximiert, $a^{k-1}$ die angepasste Gruppe von Parametern, die vorhergehend die Likelihood der Anpassungsdaten maximiert hat, $â^k$ die geschätzte Gruppe von Parametern, die mittels der Maximum-Likelihood-Linear-Regression berechnet wird und $\alpha$ ein erster Gewichtsfaktor ist.

**3.** Verfahren gemäß Anspruch 2, **dadurch gekennzeichnet, dass** sich der erste Gewichtsfaktor ($\alpha$) dynamisch verändert in Abhängigkeit der Zeit, in welcher ein neuer bestimmter Sprecher das System verwendet.

**4.** Verfahren gemäß Anspruch 3, **dadurch gekennzeichnet, dass** der erste Gewichtsfaktor ($\alpha$) in der Zeit, in welcher der bestimmte Sprecher das System verwendet, abnimmt.

**5.** Verfahren gemäß Anspruch 4, **dadurch gekennzeichnet, dass** der erste Gewichtsfaktor ($\alpha$) wie folgt berechnet wird:

$$\alpha^k = \frac{n^k}{\tau^{k-1} + n^k},$$

wobei $n^k$ die Anzahl von Rahmen ist, die bisher während des Anpassungsschritts k beobachtet wurden, und $\tau^{k-1}$ ein zweiter Gewichtsfaktor ($\tau$), der heuristisch bestimmt wird, ist.

**6.** Verfahren gemäß Anspruch 5, **dadurch gekennzeichnet, dass** der zweite Gewichtsfaktor ($\tau$) von der Anzahl der Sprachrahmen abhängt, die bereits von dem bestimmten Sprecher beobachtet wurden, so dass die bereits durchgeführte Anpassung ein größeres Gewicht hat, als neu gesprochene Äußerungen.

**7.** Verfahren gemäß Anspruch 5 oder 6, **dadurch gekennzeichnet, dass** sich der zweite Gewichtsfak-

tor ($\tau$) nach jedem Anpassungsschritt um $n^k$ erhöht.

**8.** Verfahren gemäß einem der vorstehenden Ansprüche, **dadurch gekennzeichnet, dass** die Gruppe von Parametern ($a^k$) zur Maximierung der Likelihood der Anpassungsdaten, die Mittelwertparameter ($\mu_{ir}^k$, i: Anzahl der entsprechenden Gauss-Klasse, r: Anzahl der entsprechenden Regressionsklasse innerhalb der entsprechenden Gauss-Klasse) in Mixture-Gauss-HMM-Systemen sind.

**9.** Verfahren gemäß einem der vorstehenden Ansprüche, **dadurch gekennzeichnet, dass** die Gruppe von Parametern ($a^k$) zur Maximierung der Likelihood der Anpassungsdaten die Gauss-Varianzparameter ($\sum$) in Mixture-Gauss-HMM-Systemen sind.

## Revendications

**1.** Procédé pour réaliser une adaptation de locuteur non supervisée pour des modèles de Markov cachés de densité continue en utilisant l'adaptation par régression linéaire de probabilité maximum, **caractérisé en ce que** :

pour une adaptation en ligne, un groupe adapté de paramètres ($a^k$) pour maximiser la probabilité des données d'adaptation est une somme pondérée du groupe adapté au préalable de paramètres ($a^{k-1}$) et du groupe estimé de paramètres ($a^k$) conformément à la régression linéaire de probabilité maximum.

**2.** Procédé selon la revendication 1, **caractérisé en ce que** la somme pondérée est calculée comme suit :

$$a^k = \alpha \cdot â^k + (1-\alpha) \cdot a^{k-1}$$

où k est le pas d'adaptation réel, $a^k$ est le groupe adapté de paramètres qui maximise la probabilité des données d'adaptation, $a^{k-1}$ est le groupe adapté de paramètres qui a maximisé au préalable la probabilité des données d'adaptation, $â^k$ est le groupe estimé de paramètres qui est calculé à l'aide de la régression linéaire de probabilité maximum et $\alpha$ est un premier facteur de pondération.

**3.** Procédé selon la revendication 2, **caractérisé en ce que** ledit premier facteur de pondération ($\alpha$) varie dynamiquement en fonction du temps pendant lequel un nouveau locuteur spécifique est en train d'utiliser le système.

**4.** Procédé; selon la revendication 3, **caractérisé en**

**ce que** ledit premier facteur de pondération ($\alpha$) diminue en fonction du temps pendant lequel ledit locuteur spécifique utilise le système.

5. Procédé selon la revendication 4, **caractérisé en ce que** le premier facteur de pondération ($\alpha$) est calculé comme suit :

$$\alpha^k = \frac{n^k}{\tau^{k-1} + n^k} \, ,$$

où $n^k$ est le nombre de trames qui ont été observées jusqu'ici pendant un pas d'adaptation k et $\tau^{k-1}$ est un second facteur de pondération ($\tau$) qui est déterminé de façon heuristique.

6. Procédé selon la revendication 5, **caractérisé en ce que** ledit second facteur de pondération ($\tau$) dépend du nombre de trames de parole qui ont déjà été observées au niveau dudit locuteur spécifique de telle sorte que l'adaptation déjà réalisée présente un poids plus gros que des émissions de son nouvellement parlées.

7. Procédé selon la revendication 5 ou 6, **caractérisé en ce que** ledit second facteur de pondération ($\tau$) augmente de $n^k$ après chaque pas d'adaptation.

8. Procédé selon l'une quelconque des revendications précédentes, **caractérisé en ce que** ledit groupe de paramètres ($a^k$) pour maximiser la probabilité des données d'adaptation est les paramètres moyens ($\mu_{ir}^k$, i : numéro de la classe gaussienne respective, r : numéro de la classe de régression respective à l'intérieur de la classe gaussienne respective) dans des systèmes HMM gaussiens mixtes.

9. Procédé selon l'une quelconque des revendications précédentes, **caractérisé en ce que** ledit groupe de paramètres ($a^k$) pour maximiser la probabilité des données d'adaptation est les paramètres de variance gaussiens ($\sum$) dans des systèmes HMM gaussiens mixtes.

Fig. 1